# EUROPEAN PATENT APPLICATION

(11) **EP 4 366 438 A1**
(43) Date of publication of application: **08.05.2024**
(21) Application number: 23202346.5
(22) Date of filing: 09.10.2023
(51) Int. Cl.: H04W 72/25, H04W 72/563, H04W 72/40, H04W 72/02

(54) **METHODS AND APPARATUSES RELATING TO WIRELESS COMMUNICATION**

(30) Priority: 02.11.2022 GB 202216310
(71) Applicant: Nokia Technologies Oy, 02610 Espoo (FI)
(72) Inventor: BARBU, Oana-Elena, 9220 Aalborg (DK); KIILERICH PRATAS, Nuno Manuel, 9220 Aalborg (DK); MICHALOPOULOS, Diomidis, 81541 Munich (DE)
(74) Representative: Nokia EPO representatives

(57) **Abstract**

This specification describes a first terminal device comprising means for transmitting resource classification information for use by a second terminal device in determining which of a set of resources to use in performance of sidelink transmission, wherein the resource classification information indicates that a particular resource of the set of resources belongs to a particular resource class of a plurality of resource classes.

## Description

### Field

This specification relates generally to wireless communication.

### Background

Terminal devices, sometimes referred to as 'user equipment' (UE) devices, can communicate wirelessly with other terminal devices. Such communication is sometimes referred to as sidelink (SL) or device-to-device (D2D) communication and may facilitate a variety of tasks. In addition, sidelink transmissions may be used for tasks such as device and/or object localisation.

### Summary

In a first aspect, this specification describes a method performed by a first terminal device. The first terminal device may thus comprise means for performing the operations of the method of the first aspect. In some examples, the means may comprise at least one processor, and at least one memory storing instructions that, when executed by the at least one processor, cause performance of the operations of the method of the first aspect.

According to the first aspect, the method performed by the first terminal device comprises transmitting resource classification information for use by a second terminal device in determining which of a set of resources to use in performance of sidelink transmission, wherein the resource classification information indicates that a particular resource of the set of resources belongs to a particular resource class of a plurality of resource classes.

The particular resource class of the plurality of resource classes to which the particular resource belongs may indicate whether and/or how the second terminal devices can use the particular resource in performance of sidelink transmission. In addition or alternatively, the method may comprise receiving, by the first terminal device and from a network node, configuration information for use in configuring the first terminal to generate the resource classification information based on measurements of signals received from at least one transmit-receive point using at least one resource of the set of resources. The configuration information may include resource classification criteria for use in classifying resources via which the signals are received from the at least one transmit-receive point.

In some examples, the plurality of resource classes may include a first resource class which indicates that resources classified as such are permitted for use in performance of sidelink transmission, and a second resource class which indicates that resources classified as such are not permitted for use in performance of sidelink transmission. The plurality of resource classes may further include a third resource class which indicates that resources classified as such are permitted for use in performance of sidelink transmission with a sidelink transmission power below a sidelink transmission power threshold, wherein the first resource class indicates that resources classified as such are permitted for use in performance of sidelink transmission with a sidelink transmission power above or below the sidelink transmission power threshold. In some examples, at least one resource of the set of resources is classified as belonging to the first class when measurements of first signals received at the first terminal device from at least one network node using the at least one resource are indicative of the first signals being of a first signal quality, and the at least one resource of the set of resources is classified as belonging to the second class when measurements of second signals received at the first terminal device from at least one network node using the at least one resource are indicative of the second signals being of a second signal quality that is higher than the first signal quality. The plurality of resource classes may further include a third resource class which indicates that resources classified as such are permitted for use in performance of sidelink transmission with a sidelink transmission power below a sidelink transmission power threshold, wherein the first resource class indicates that resources classified as such are permitted for use in performance of sidelink transmission with a sidelink transmission power above or below the sidelink transmission power threshold, and wherein the at least one resource of the set of resources is classified as belonging to the third class when measurements of third signals received at the first terminal device from at least one network node using the at least one resource are indicative of the third signals being of a third signal quality that is higher than the second signal quality.

In some examples, the measurements of the received signals may include at least one of: a signal power measurement, a signal strength measurement, and a signal-to-interference-plus-noise ratio, SINR, measurement. In some such examples, the measurements may be indicative of the first signal quality level when (i) a quality measurement determined using the signal power and signal strength measurements is less than a first quality threshold and (ii) the SINR measurement is less than a first SINR threshold. The measurements may be indicative of the second signal quality when (i) the quality measurement determined using the signal power and signal strength measurements is greater than the first quality threshold and (ii) the SINR measurement is greater than the first SINR threshold. The plurality of resource classes may further include a third resource class which indicates that resources classified as such are permitted for use in performance of sidelink communication below a sidelink transmission power threshold, wherein the first resource class indicates that resources classified as such are permitted for use in performance of sidelink communication above and below a sidelink transmission power threshold. In such examples, the at least one resource of the set of resources may be classified as belonging to the third class when the measurements are indicative of a third signal quality, wherein the third signal quality is higher than the second signal quality. Further, the measurements may be indicative of the second signal quality when (i) the quality measurement determined using the signal power and signal strength measurements is less than a second quality threshold, wherein the second quality threshold is greater than the first quality threshold, and (ii) the SINR measurement is less than a second SINR threshold, wherein the second SINR threshold is greater than the first SINR threshold, and the measurements may be indicative of the third signal quality when (i) the quality measurement determined using the signal power and signal strength measurements is greater than the second quality threshold and (ii) the SINR measurement is greater than the second SINR threshold.

The resource classification information may be generated based on measurements of positioning reference signals received from at least one transmit-receive point using at least one resource of the set of resources.

The method of the first aspect may further comprise receiving, by the first terminal device, signals from at least one transmit-receive point using at least one resource of the set of resources, wherein the resource classification information is generated based on measurements of the received signals performed by the first terminal device.

The method of the first aspect may further comprise receiving, by the first terminal device and from another terminal device or a network node, additional resource classification information for use in determining which of the set of resources to use in performance of sidelink transmission. The additional resource classification information may be received prior to the transmission of the resource classification information, and the transmitted resource classification information may be based on the additional resource classification information. The transmitted resource classification information may be the additional resource classification information.

In some examples, the additional resource classification information may conflict with the resource classification information. The method of the first aspect may thus comprise, the first terminal device transmitting correction information for use by a terminal device that generated the additional resource classification information in modifying a portion of the additional resource classification information that conflicts with a portion of the resource classification information.

In some examples, the resource classification information may indicate that the particular resource of the set of resources belongs to more than one resource class of the plurality of resource classes with respective probabilities and the respective probabilities may be for use by the second terminal device in determining that the particular resource belongs or is likely to belong to the particular resource class.

In a second aspect, this specification describes a method performed by a second terminal device. The second terminal device may thus comprise means for performing the operations of the method of the second aspect. In some examples, the means may comprise at least one processor, and at least one memory storing instructions that, when executed by the at least one processor, cause performance of the operations of the method of the second aspect.

According to the second aspect, the method performed by the second terminal device comprises receiving, from a first terminal device or a network node, resource classification information for use by the second terminal device in determining which of a set of resources to use in performance of sidelink transmission, wherein the resource classification information indicates that a particular resource of the set of resources belongs to a particular resource class of a plurality of resource classes.

The method of the second aspect may further comprise determining, by the second terminal device and based on the particular resource class of the plurality of resource classes to which the particular resource belongs, whether and/or how to use the particular resource in performance of sidelink transmission.

The plurality of resource classes may include a first resource class which indicates that resources classified as such are permitted for use in performance of sidelink transmission, and a second resource class which indicates that resources classified as such are not permitted for use in performance of sidelink transmission. The plurality of resource classes may further include a third resource class which indicates that resources classified as such are permitted for use in performance of sidelink transmission with a sidelink transmission power below a sidelink transmission power threshold, wherein the first resource class indicates that resources classified as such are permitted for use in performance of sidelink transmission with a sidelink transmission power above or below the sidelink transmission power threshold.

The method of the second aspect may further comprise the second terminal device validating the received resource classification information for use in determining which of the set of resources to use in performance of sidelink transmission.

In some examples, the resource classification information indicates that the particular resource of the set of resources belongs to more than one resource class of the plurality of resource classes with respective probabilities, and the method of the second aspect may further comprise determining, based on the respective probabilities, that the particular resource belongs or is likely to belong to the particular resource class.

The method of the second aspect may further comprise the second terminal device receiving, from another terminal device or the network node, additional resource classification information for use in determining which of the set of resources to use in performance of sidelink transmission.

In some examples, the additional resource classification information differs with the resource classification information. In some such examples, the method of the second aspect may further comprise the second terminal device transmitting correction information for use by at least one of: (i) a terminal device that generated the resource classification information in modifying a portion of the resource classification information that conflicts with a portion of the additional resource classification information, and (ii) a terminal device that generated the additional resource classification information in modifying the portion of the additional resource classification information that conflicts with the portion of the resource classification information.

The method of the second aspect may further comprise the second terminal device receiving from the network node a signal indicative of a selection of a preferred resolution strategy from a strategy list stored at the terminal device, the preferred resolution strategy being for use in resolving conflicts between the resource classification information and the additional resource classification information.

In a third aspect, this specification comprises apparatus (e.g. a first terminal device or a component of the first terminal device) comprising at least one processor and at least one memory storing instructions that, when executed by the at least one processor, cause the apparatus at least to perform: transmitting resource classification information for use by a second terminal device in determining which of a set of resources to use in performance of sidelink transmission, wherein the resource classification information indicates that a particular resource of the set of resources belongs to a particular resource class of a plurality of resource classes.

The particular resource class of the plurality of resource classes to which the particular resource belongs may indicate whether and/or how the second terminal devices can use the particular resource in performance of sidelink transmission. In addition or alternatively, the instructions, when executed by the at least one processor, may cause the apparatus at least to perform receiving, from a network node, configuration information for use in configuring the first terminal to generate the resource classification information based on measurements of signals received from at least one transmit-receive point using at least one resource of the set of resources. The configuration information may include resource classification criteria for use in classifying resources via which the signals are received from the at least one transmit-receive point.

In some examples, the plurality of resource classes may include a first resource class which indicates that resources classified as such are permitted for use in performance of sidelink transmission, and a second resource class which indicates that resources classified as such are not permitted for use in performance of sidelink transmission. The plurality of resource classes may further include a third resource class which indicates that resources classified as such are permitted for use in performance of sidelink transmission with a sidelink transmission power below a sidelink transmission power threshold, wherein the first resource class indicates that resources classified as such are permitted for use in performance of sidelink transmission with a sidelink transmission power above or below the sidelink transmission power threshold. In some examples, at least one resource of the set of resources is classified as belonging to the first class when measurements of first signals received at the first terminal device from at least one network node using the at least one resource are indicative of the first signals being of a first signal quality, and the at least one resource of the set of resources is classified as belonging to the second class when measurements of second signals received at the first terminal device from at least one network node using the at least one resource are indicative of the second signals being of a second signal quality that is higher than the first signal quality. The plurality of resource classes may further include a third resource class which indicates that resources classified as such are permitted for use in performance of sidelink transmission with a sidelink transmission power below a sidelink transmission power threshold, wherein the first resource class indicates that resources classified as such are permitted for use in performance of sidelink transmission with a sidelink transmission power above or below the sidelink transmission power threshold, and wherein the at least one resource of the set of resources is classified as belonging to the third class when measurements of third signals received at the first terminal device from at least one network node using the at least one resource are indicative of the third signals being of a third signal quality that is higher than the second signal quality.

In some examples, the measurements of the received signals may include at least one of: a signal power measurement, a signal strength measurement, and a signal-to-interference-plus-noise ratio, SINR, measurement. In some such examples, the measurements may be indicative of the first signal quality level when (i) a quality measurement determined using the signal power and signal strength measurements is less than a first quality threshold and (ii) the SINR measurement is less than a first SINR threshold. The measurements may be indicative of the second signal quality when (i) the quality measurement determined using the signal power and signal strength measurements is greater than the first quality threshold and (ii) the SINR measurement is greater than the first SINR threshold. The plurality of resource classes may further include a third resource class which indicates that resources classified as such are permitted for use in performance of sidelink communication below a sidelink transmission threshold, wherein the first resource class indicates that resources classified as such are permitted for use in performance of sidelink communication above and below a sidelink transmission power threshold. In such examples, the at least one resource of the set of resources may be classified as belonging to the third class when the measurements are indicative of a third signal quality, wherein the third signal quality is higher than the second signal quality. Further, the measurements may be indicative of the second signal quality when (i) the quality measurement determined using the signal power and signal strength measurements is less than a second quality threshold, wherein the second quality threshold is greater than the first quality threshold, and (ii) the SINR measurement is less than a second SINR threshold, wherein the second SINR threshold is greater than the first SINR threshold, and the measurements may be indicative of the third signal quality when (i) the quality measurement determined using the signal power and signal strength measurements is greater than the second quality threshold and (ii) the SINR measurement is greater than the second SINR threshold.

The resource classification information may be generated based on measurements of positioning reference signals received from at least one transmit-receive point using at least one resource of the set of resources.

The instructions stored on the at least one memory of the apparatus of the sixth aspect, when executed by the at least one processor, may cause the apparatus at least to perform receiving signals from at least one transmit-receive point using at least one resource of the set of resources, wherein the resource classification information is generated based on measurements of the received signals performed by the first terminal device.

The instructions stored on the at least one memory of the apparatus of the sixth aspect, when executed by the at least one processor, may cause the apparatus at least to perform receiving, from another terminal device or a network node, additional resource classification information for use in determining which of the set of resources to use in performance of sidelink transmission. The additional resource classification information may be received prior to the transmission of the resource classification information, and the transmitted resource classification information may be based on the additional resource classification information. The transmitted resource classification information may be the additional resource classification information.

In some examples, the additional resource classification information may conflict with the resource classification information. The instructions stored on the at least one memory of the apparatus of the sixth aspect, when executed by the at least one processor, may thus cause the apparatus at least to perform transmitting correction information for use by a terminal device that generated the additional resource classification information in modifying a portion of the additional resource classification information that conflicts with a portion of the resource classification information.

In some examples, the resource classification information may indicate that the particular resource of the set of resources belongs to more than one resource class of the plurality of resource classes with respective probabilities and the respective probabilities may be for use by the second terminal device in determining that the particular resource belongs or is likely to belong to the particular resource class.

In a fourth aspect, this specification comprises apparatus (e.g. a second terminal device or a component of the second terminal device) comprising at least one processor and at least one memory storing instructions that, when executed by the at least one processor, cause the apparatus at least to perform: receiving, from a first terminal device or a network node, resource classification information for use by the second terminal device in determining which of a set of resources to use in performance of sidelink transmission, wherein the resource classification information indicates that a particular resource of the set of resources belongs to a particular resource class of a plurality of resource classes.

The instructions stored on the at least one memory of the apparatus of the seventh aspect, when executed by the at least one processor may cause the apparatus at least to perform receiving determining, by the second terminal device and based on the particular resource class of the plurality of resource classes to which the particular resource belongs, whether and/or how to use the particular resource in performance of sidelink transmission.

The plurality of resource classes may include a first resource class which indicates that resources classified as such are permitted for use in performance of sidelink transmission, and a second resource class which indicates that resources classified as such are not permitted for use in performance of sidelink transmission. The plurality of resource classes may further include a third resource class which indicates that resources classified as such are permitted for use in performance of sidelink transmission with a sidelink transmission power below a sidelink transmission power threshold, wherein the first resource class indicates that resources classified as such are permitted for use in performance of sidelink transmission with a sidelink transmission power above or below the sidelink transmission power threshold.

The instructions stored on the at least one memory of the apparatus of the seventh aspect, when executed by the at least one processor may cause the apparatus at least to perform validating the received resource classification information for use in determining which of the set of resources to use in performance of sidelink transmission.

In some examples, the resource classification information indicates that the particular resource of the set of resources belongs to more than one resource class of the plurality of resource classes with respective probabilities, and the instructions stored on the at least one memory of the apparatus of the seventh aspect, when executed by the at least one processor may cause the apparatus at least to perform determining, based on the respective probabilities, that the particular resource belongs or is likely to belong to the particular resource class.

The instructions stored on the at least one memory of the apparatus of the seventh aspect, when executed by the at least one processor may cause the apparatus at least to perform receiving, from another terminal device or the network node, additional resource classification information for use in determining which of the set of resources to use in performance of sidelink transmission.

In some examples, the additional resource classification information differs with the resource classification information. In some such examples, the method of the second aspect may further comprise the second terminal device transmitting correction information for use by at least one of: (i) a terminal device that generated the resource classification information in modifying a portion of the resource classification information that conflicts with a portion of the additional resource classification information, and (ii) a terminal device that generated the additional resource classification information in modifying the portion of the additional resource classification information that conflicts with the portion of the resource classification information.

The instructions stored on the at least one memory of the apparatus of the seventh aspect, when executed by the at least one processor may cause the apparatus at least to perform receiving from the network node a signal indicative of a selection of a preferred resolution strategy from a strategy list stored at the terminal device, the preferred resolution strategy being for use in resolving conflicts between the resource classification information and the additional resource classification information

In a fifth aspect, this specification describes a non-transitory computer readable medium comprising program instructions stored thereon for performing at least any of the operations described above with reference to the first or second aspect.

### Brief description of the figures

For better understanding of the present application, reference will now be made by way of example to the accompanying drawings in which:
Figures 1 and 2 are examples illustrating communications between a plurality of terminal devices and one or more base stations;
Figures 3 and 4 are example message flow sequences;
Figures 5 and 6 are flowcharts illustrating various operations which may be performed in accordance with examples described herein;
Figure 7 is a schematic illustration of an example configuration of a terminal device which may be configured to perform various operations described with reference to Figures 1 to 6;
Figure 8 is a schematic illustration of an example configuration of a base station which may be configured to perform various operations described with reference to Figures 1 to 6; and
Figure 9 is an illustration of a computer-readable medium upon which computer readable code may be stored.

### Detailed description

In the description and drawings below, like reference numerals refer to like elements throughout.

It may be beneficial for terminal devices to be capable of accurate localisation. For instance, in various applications, such as those relating to public safety, industrial internet of things (IoT) and vehicle-to-everything (V2X) communications, it may be beneficial for a terminal device to be capable of accurate localisation. Localisation capability, sometimes referred to as positioning capability, may refer to the terminal device's ability to determine its location in an environment.

Localisation of a target terminal device (e.g. to cm-level accuracy) may be performed using signals, which are transmitted from a transmit receive point (TRP) or other network node, such but not limited to a base station (e.g. a gNodeB (gNB)) or a Road Side Unit (RSU), and which are received at the target terminal device. In some examples, such signals may be referred to as travelling via a 'Uu interface', between a UE and an Evolved Universal Terrestrial Radio Access (E-UTRA) network or a 5G network. Such signals may be referred to as 'Uu signals'. In some examples, signals used for localisation (e.g. positioning reference signals), sometimes referred to as 'localisation signals' or 'positioning signals', are designed to be long-range and hence have a dense allocation in time, frequency, and space. This means that multiple (e.g. ten or more) TRPs can be configured to transmit such signals with high repetition and periodicity rates (for instance, but not limited to, a repetition of 4 symbols and periodicity of 1 subframe), occupying various portions of the spectrum, regardless of the operating frequency of a serving cell of the target terminal device. In some such examples, the target terminal device may make use of multiple measurement gaps in order to measure the signals incoming from TRPs that are not in the serving cell. Put another way, multiple opportunities (i.e. windows) in which the terminal device is otherwise transmitting/receiving may enable successful measurement of signals transmitted on carriers and/or resources outside of those used by the serving cell traffic.

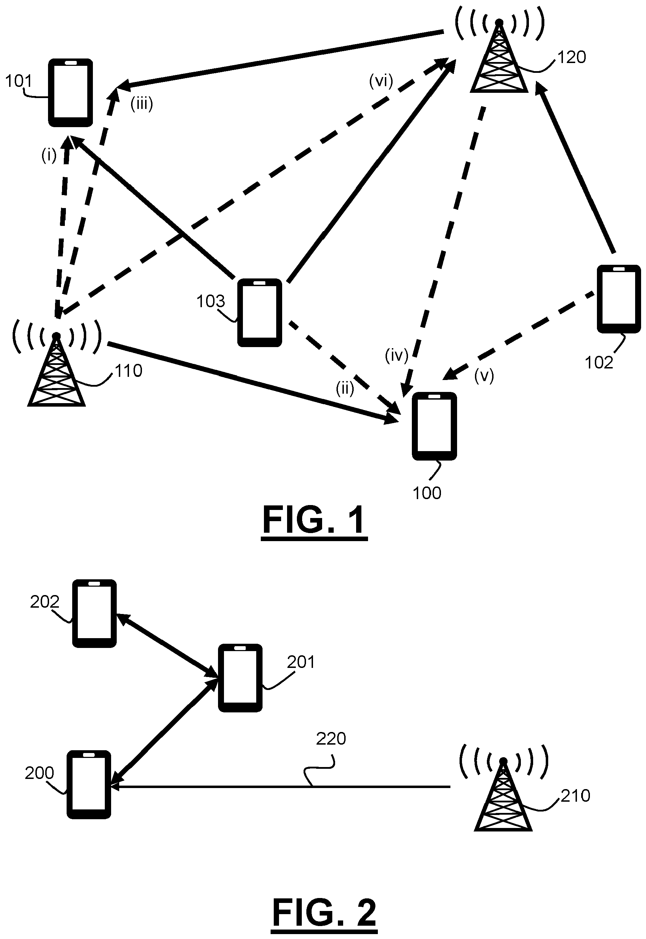

Implementations of the technology described herein relate to determining which of a set of resources to use in performance of sidelink transmission (e.g. for device-to-device communications or localisation/positioning). Some example aspects relate to exchanging resource classification information between terminal devices to facilitate determination of which of a set of resources to use in performance of sidelink transmission. As described in detail below with reference to Figure 1, various implementations of the technology described herein may allow for the coexistence of Uu traffic with traffic between terminal devices ('sidelink, SL, traffic'). Furthermore, implementations of the technology described herein may allow for a reduction in interference between Uu and SL traffic. In this way, accurate localisation of terminal devices in a multi-TRP environment may be facilitated.

In some examples, the term 'terminal device' or 'user equipment' may refer to any device employed by a user to communicate. Whilst the terminal devices of Figures 1, 2 and 5 are depicted as mobile telephones, it will of course be appreciated that terminal devices may comprise various other devices, including, but not limited to laptops, smartwatches, tablet computers and vehicle-based terminal devices, such as those mounted on cars, buses, uncrewed aerial vehicles (UAVs), aeroplanes, trains, or boats. Alternatively, mobile terminal devices may be carried by a user, or worn on their person.

Various methods and apparatuses are described in detail below, by way of example only, in the context of a cellular network, such as an Evolved Universal Terrestrial Radio Access (E-UTRA) network or a 5G network. However, it will be appreciated that the techniques may be applicable with communications networks of other types (e.g. but not limited to other types of cellular network). Cellular networks may comprise one or more base stations, sometimes referred to as transmit-receive points (TRPs) or access points (e.g. but not limited to gNBs and/or eNBs). Whilst only two base stations are depicted in Figure 1, a radio access network (RAN, NG-RAN) may typically comprise thousands of such base stations. Together, the base stations may provide cellular network coverage to one or more terminal devices over a wide geographical area. As described above, various terminal devices may also be capable of directly communicating with other terminal devices using SL or D2D communication. For instance, such direct communication may refer to communication between terminal devices without traversing base stations or the core network (CN). In some examples, SL or D2D communications may offer improved spectral efficiency, throughput, energy efficiency, and/or delay as compared to conventional cellular communications via a base station.

Although by no means limited to such an implementation, the examples of the technology described herein may readily be integrated into any New Radio (NR) terminal device which performs SL communications, such as SL positioning (e.g. as standardised in 3GPP Release 18). Furthermore, examples of the technology described herein may be compliant with future extensions to TS. 38.321 and TS. 37.355, which are expected to be specified in 3GPP Release 19.

In some implementations and, for instance, depending on the characteristics of the cellular network, the base stations and terminal devices within the network may be configured to communicate with one another, for instance, using an OFDM-based communication scheme, such as orthogonal frequency-division multiple access (OFDMA), single carrier frequency-division multiple access (SC-FDMA), and/or cyclic prefix orthogonal frequency-division multiple access (CP-OFDMA). For instance, in some non-limiting examples, CP-OFDMA may be used for SL communications. In addition or alternatively, OFDMA may be used for downlink (DL) communications and SC-FDMA may be used for uplink (UL) communications. For Vehicle-to-Vehicle (V2V) applications, SL communications may, in some examples, take place via a PC5 interface.

In some examples, the transmission and reception of signals for use in localisation (`localisation signals') as described above may be coordinated by a core network (CN) entity, such as the location management function (LMF). For instance, the CN entity may cause a configuration message to be transmitted to at least one TRP (for instance using a NR Positioning Protocol A (NRPPa) interface), thereby to cause the at least one TRP to be configured for transmission of signals for use in localisation of a target terminal device. In such examples, the configuration message may include information for use in configuring transmission apparatus (e.g. antenna apparatus) of the TRP to transmit the localisation signals for reception by the target terminal device. In addition or alternatively, the CN entity may cause a configuration message to be transmitted from a network node (e.g. a base station or other network element such as an LMF), for instance, to a target terminal device (e.g. using a Long Term Evolution (LTE) Positioning Protocol (LPP) interface), thereby to cause the target terminal device to be configured for reception of signals for use in localisation of the target terminal device. In such examples, the configuration message may include information for use in configuring reception apparatus (e.g. antenna apparatus) of the target terminal device for reception of the localisation signals transmitted by the TRP.

In some examples, the localisation signals may be configured to use various resources (e.g. time-frequency resources). For instance, resources for use by the localisation signals may be allocated using physical resource blocks (PRBs). It will be appreciated that the localisation signals may be configured with various periodicities (e.g. from 1 millisecond to hundreds of milliseconds), repetition (e.g. the signals may occupy one or more symbols in a slot, or the entire slot), and/or comb patterns (e.g. the signals may occupy every *X^{th}* subcarrier in the allocated bandwidth, for instance where *X*=*2, 4, 6, 8, 12*, etc.). In some examples, information indicative of the configuration of the localisation signals may be included in the configuration messages transmitted to the at least one TRP and/or the target terminal device.

Coordination of resources used for localisation signals by a CN entity, such as the LMF, ensures that the localisation signals transmitted by different TRPs do not interfere with one another. For instance, such coordination may ensure that localisation signals transmitted via adjacent channels are orthogonal. However, this resource coordination does not *per se* consider the impact or interference caused by transmitting localisation signals on other communications taking place via the same interface (e.g. sidelink communications). Moreover, there is a risk of other communications flows degrading the reception of the localisation signals at the target UE.

Figure 1 depicts a plurality of UEs 100, 101, 102, 103 in communication with each other and a plurality of TRPs 110, 120. The arrows indicate transmissions between the network entities, with dashed arrows indicating transmissions that interfere with other network activity. It will be appreciated that the type, number, relative positions and network topology of the TRPs/UEs depicted is by way of example only, and other configurations are possible.

As described above, transmission of localisation signals in environments with multiple TRPs may lead to various types of interference, both suffered and imposed by the localisation signals. The various types of interference experienced due to the coexistence of localisation signal transmissions with other types of traffic using some or all of the same resources may be classified into two main categories: interference of signals transmitted between base stations and terminal devices (`Uu traffic') with signals transmitted between UEs (`sidelink, SL, traffic'), sometimes referred to as `Uu-SL interference'; and interference of Uu traffic with other Uu traffic, sometimes referred to as 'Uu-Uu interference'.

In the example of Figure 1, Uu-SL interference may include one or more of: (i) interference of localisation signals transmitted by TRP 110 into reception, at UE 101, of SL signals transmitted by UE 102; and (ii) interference of SL signals transmitted by UE 102 into reception, at UE 100, of localisation signals transmitted by TRP 110.

In the depicted example, Uu-Uu interference may include one or more of: (iii) interference of localisation signals transmitted by TRP 110 into reception, at UE 101, of downlink (DL) signals transmitted by TRP 120; (iv) interference of DL signals transmitted by TRP 120 into reception, at UE 100, of localisation signals transmitted by TRP 110; (v) interference of uplink (UL) signals transmitted by UE 103 into reception, at UE 100, of localisation signals transmitted by TRP 110; and (vi) interference of localisation signals transmitted by TRP 110 into reception, at TRP 120, of UL signals transmitted by UE 102.

It will of course be appreciated that interference as described above may cause degradation in the strength or quality of signal reception, with stronger or more powerful 'interfering signals' causing greater degradation. Such degradation may lead to a reduction in localisation accuracy of terminal devices, as well as negatively impact the quality of communications between entities in the network.

In a synchronized time-division-duplex (TDD) network, the interference types (v) and (vi) do not occur. However, networks implementing dynamic TDD may allow for the occurrence of any of interference types (i) to (vi). Although dedicating resources to transmission/reception of Uu traffic, may reduce or prevent such interference, allocating resources in this way may be costly (in terms of resources), and may run counter to the principle of maximizing spatial reuse of resources where possible. This issue is further described below with reference to Figure 2.

As described above, implementations of the technology described herein relate to determining which of a set of resources to use in performance of sidelink transmission. Some example aspects relate to exchanging resource classification information between terminal devices to facilitate determination of which of a set of resources to use in performance of sidelink transmission.

Various implementations of the technology described herein may provide solutions for the coexistence of Uu and SL traffic, by reducing or eliminating interference between the two. For instance, by obtaining classifications of Uu resources and enabling their opportunistic reuse for SL activities as enabled by the various implementations of the technology described herein, SL terminal devices may be able to mitigate the occurrence of Uu-SL interference as described with reference to Figure 1. Put another way, UEs performing SL communications may be able to reduce or even eliminate interference of types (i) and (ii) as described with reference to Figure 1.

At present, due to the limited commercial deployments of both SL communications and NR-based positioning techniques, this problem has not been yet observed in the field. However, as both become more ubiquitous, this problem is expected to become more pronounced. Various implementations of the technology described herein may address this problem.

Figure 2 depicts terminal devices 200 to 202, together with TRP 210. As will of course be appreciated, aspects of Figure 2 may correspond to aspects described with reference to Figure 1. For instance, TRP 210 may correspond to TRP 110, terminal device 200 may correspond to terminal device 100, terminal device 201 may correspond to terminal device 103, and terminal device 202 may correspond to terminal device 101. It will be further appreciated that, in some examples, any of terminal devices 200 to 202 depicted in Figure 2 may correspond to any of terminal devices 100 to 103 depicted in Figure 1.

In general terms, Figure 2 relates to the situation in which a terminal device 200 (the 'target UE') receives localisation signals (e.g. positioning reference signals, PRS) from a TRP 210 (e.g. a base station or a RSU) using resources that are also used by a nearby pair of terminal devices 201, 202 in performance of SL communications.

In situations in which TRP 210 is distant (e.g. when TRP 210 is not located in the serving cell of target UE 200), the localisation signals may be received by terminal device 200 at low power, and may be inadvertently interfered with by the comparatively stronger SL signals (i.e. interference of type (ii) as described with reference to Figure 1). Alternatively, in situations in which TRP 210 is less distant, the localisation signals may be received by terminal device 200 at a higher power, and may inadvertently interfere with the SL signals transmitted between the pair of terminal devices 201, 202 (i.e. interference of type (i) as described above with reference to Figure 1).

In practice, such situations are likely to occur due to a lack of mechanisms for controlling cross-service interference between different base stations (e.g. gNBs). Such cross-service interference may include, but is not limited to, interference between traffic for the purposes of positioning and communications. Put another way, whilst a particular base station may not co-schedule (i.e. allocate the same resources to) localisation signals and data traffic, data traffic may be scheduled by one base station using the same resources (e.g. physical resource blocks) as another base station is using for transmission of localisation signals.

As will of course be appreciated, reserving resources for localisation services (i.e. for transmission/reception of localisation signals) may be spectrally inefficient, not least because the above-described interference situation arises only when the target UE is in the neighbourhood of a SL communicating UE pair (such as terminal device pair 201, 202). When the target UE is not nearby to a SL communicating UE pair, the resources may be freely reused between SL and Uu services.

As described above, implementations of the technology described herein may close this `gap', allowing for coexistence of Uu and SL traffic without inefficiently dedicating resources to localisation services.

In general terms, aspects of the technology described herein relate to 'probe UEs' which perform measurements of localisation signals transmitted by TRPs, thereby to classify resources used for transmission of such signals. This classification (sometimes referred to as a resource 'ranking') is then distributed to 'peer UEs' which can assess, using the classification, whether and/or how to use these resources for other purposes (such as SL communications or SL positioning). In some examples the peer UE may receive the classification through a base station (e.g. its serving base station). In other examples, the peer UE may receive the classification via sidelink communications with one or more other UEs. For instance, the peer UE may receive the classification directly from the probe UE which generated it or from another peer UE which relays a classification it has received from a further UE. In some such examples, this further UE may be a probe UE or another such 'forwarding UE'.

In the example of Figure 2, first terminal device 200 transmits resource classification information for use by second terminal device 201 in determining which of a set of resources (e.g. time-frequency resources) to use in performance of sidelink transmission (e.g. communication with third terminal device 202). In some examples, the transmitted resource classification information is received at second terminal device 201 directly. In other examples, the resource classification information is relayed via one or more other terminal devices/base stations as described above.

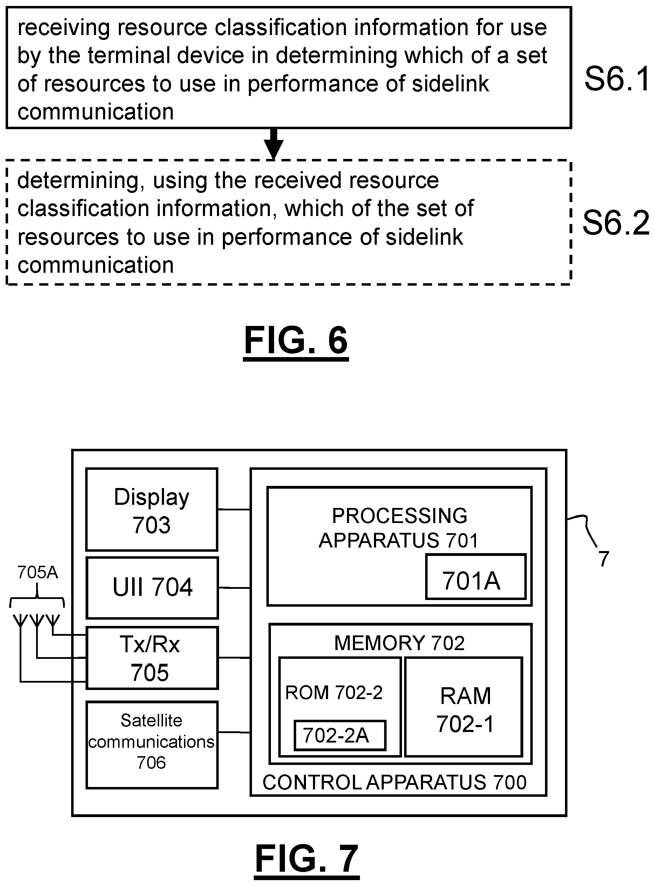

Having received the resource classification information, second terminal device 201 may then utilise the received resource classification information to determine which of the set of resources to use in performance of sidelink transmission (e.g. communication with third terminal device 202). In some examples, the resource classification information may indicate that a particular resource of the set of resources belongs to a particular resource class of a plurality of resource classes. In such examples, determining which of the set of resources to use in performance of sidelink transmission may comprise determining whether and/or how to use the particular resource in the performance of the sidelink communication based on the particular resource class of the plurality of resource classes to which the particular resource belongs. Put another way, the particular resource class of the plurality of resource classes to which the particular resource belongs may indicate whether and/or how the second terminal device can use the particular resource in performance of sidelink transmission. In some examples, the resource classification information may indicate that the particular resource belongs to more than one resource class of the plurality of resource classes with respective probabilities. In such examples, the second terminal device may determine whether and/or how to use the particular resource in performance of the sidelink communication based on the respective probabilities. This situation is described in greater detail below with reference to Figure 6.

For instance, the plurality of resource classes may include a first resource class which indicates that resources classified as such are permitted for use in performance of sidelink transmission, and a second resource class which indicates that resources classified as such are not permitted for use in performance of sidelink transmission. Put another way, sidelink transmissions performed using resources identified by the resource classification information as belonging to the first class may not impose/suffer (or be deemed unlikely to impose/suffer) interference with Uu signals (or any such interference is expected to be below an acceptable threshold). By contrast, sidelink transmission performed using resources identified by the resource classification information as belonging to the second class may impose/suffer (or be deemed likely to impose/suffer) interference with Uu signals (or any such interference is expected to be above an acceptable threshold). Put yet another way, in some examples, resources classified in the second class may not be used for sidelink transmission or reception without causing or experiencing interference with signals 220 (e.g. localisation signals) transmitted by TRP 210. On the other hand, resources classified in the first class may be used for sidelink transmission or reception without any such problems arising.

In some examples, a resource of the set of resources may be classified as belonging to the first class when measurements of signals 220 (e.g. localisation signals, such as positioning reference signals, PRS) received at first terminal device 200 from at least one TRP (e.g. base station 210) using the resource are indicative of a first signal quality (which may be referred to as a first signal quality level). For instance, measurements indicative of the first signal quality may correspond to Uu signals which are inadequate for successful performance of downlink communication by nearby UE devices (i.e. low-quality Uu signals). As such, resources in the first resource class can be safely reused for other purposes (e.g. SL communication) without fear of causing interference.

A resource may be classified as belonging to the second class when measurements of signals 220 (e.g. localisation signals, such as positioning reference signals, PRS) received at first terminal device 200 from at least one TRP (e.g. base station 210) using the resource are indicative of a second signal quality (which may be referred to as a second signal quality level) that is higher than the first signal quality. For instance, measurements indicative of the second signal quality may correspond to signals which are adequate for successful performance of downlink communication by nearby UE devices. As such, use of resources in the second resource class for other purposes (e.g. SL communication) may carry a risk of interfering with Uu traffic.

In some examples, the plurality of resource classes may further include a third resource class which indicates that resources classified as such are only permitted for use in performance of sidelink transmission with a transmission power below a sidelink transmission power threshold. In such examples, the first resource class may indicate that resources classified as such are permitted for use in performance of sidelink communication with a transmission power both above and below the sidelink transmission power threshold.

In some examples, a resource of the set of resources may be classified as belonging to the third class when measurements of signals 220 (e.g. localisation signals, such as positioning reference signals, PRS) received at first terminal device 200 from at least one TRP (e.g. base station 210) using the resource are indicative of a third signal quality (which may also be referred to as a third signal quality level) which is higher than the second signal quality. For instance, measurements indicative of the third signal quality may correspond to Uu signals which are strong enough to support an additional interference level (i.e. high-quality Uu signals). In this case, whilst the Uu signals may be strong enough to support an additional interference level for SL transmissions below the power threshold, sidelink transmissions at a higher power may cause (or be deemed likely to cause) unacceptable levels of interference.

On the other hand, in such examples, resources classified as belonging to the first class may be permitted for use in sidelink transmission power at a transmission power that is above or below the power threshold (i.e. such resources can be fully used for sidelink transmission).

As will be appreciated from the above, in examples in which the plurality of resource classes includes a third resource class in addition to the first and second resource classes, measurements indicative of the second quality level may correspond to signals which are strong enough for successful performance of downlink communication by nearby UE devices, but which are not strong enough to support an additional interference level (i.e. medium-quality Uu signals). As such, by contrast to resources in the first or third resource classes, resources in the second resource class may not be permitted for use in performance of sidelink transmission.

It will be appreciated that the plurality of resource classes may include some, all, or none of the classes described above. For instance, the plurality of resource classes may include the first and second resource classes, the second and third resource classes, the first and third resource classes, or the first, second and third resource classes. In addition or alternatively, the plurality of resource classes may include one or more further classes (e.g. fourth, fifth, sixth resource classes). As will be appreciated, in some examples, such further classes may correspond to one or a combination of the first, second or third resource classes (e.g. with different transmission power thresholds or other restrictions), or may correspond to different signal measurements than those explicitly described above.

In some examples, the measurements of signals 229 received from TRPs such as base station 210 may include at least: a signal power measurement, a signal strength measurement, and a signal-to-interference-plus-noise ratio, SINR, measurement.

In some such examples, the measurements may be indicative of the first quality level when (i) a quality measurement determined using the signal power and signal strength measurements is less than a first quality threshold and (ii) the SINR measurement is less than a first SINR threshold. Similarly, the measurements may be indicative of the second quality level when (i) the quality measurement determined using the signal power and signal strength measurements is greater than the first quality threshold and (ii) the SINR measurement is greater than the first SINR threshold.

In examples in which the plurality of resource classes includes a third resource class in addition to the first and second resource classes, the measurements may be indicative of the second quality level when (i) the quality measurement determined using the signal power and signal strength measurements is less than a second quality threshold (the second quality threshold being greater than the first quality threshold) and is greater than the first quality threshold and (ii) the SINR measurement is less than a second SINR threshold (the second SNIR threshold being greater than the first SNIR threshold) and is greater than the first SINR threshold. In such examples, the measurements may be indicative of the third quality level when (i) the quality measurement determined using the signal power and signal strength measurements is greater than the second quality threshold and (ii) the SINR measurement is greater than the second SINR threshold.

In some examples, the first/second quality thresholds and/or the first/second SINR thresholds used to generate the resource classification information may be received at first terminal device 200 from a network node, for instance from or via a base station. These thresholds, or other resource classification criteria, may be provided by a CN entity such as the location management function (LMF). In some examples, the resource classification criteria used to generate the resource classification information may be transmitted together with the resource classification information for use by the peer terminal devices in determining which of the set of resources to use for SL communication. As will be appreciated, use of different resource classification criteria (e.g. different values for thresholds) to determine the classification may result in various resources being classified in different ways. As such, use of resource classification criteria by first terminal device 200 in determining which of the set of resources to use for SL communication may allow for different Uu resources to be excluded or down-prioritised as appropriate.

In some examples, the signal power measurement of the received signals may be a reference signal received power, RSRP, measurement and the signal strength measurement may be a received signal strength indicator, RSSI, measurement. In such examples, the measurements may be indicative of the first quality level when a ratio of the RSRP measurement to the RSSI measurement (`the RSRP-RSSI ratio') is less than a first threshold ratio (e.g. when the RSRP measurement is significantly less than the RSSI measurement). The measurements may be indicative of the second quality level when the RSRP-RSSI ratio is greater than the first threshold ratio, but less than a second threshold ratio (e.g. when the RSRP measurement is less than the RSSI, but not 'significantly' so). In examples including a third resource class, the measurements may be indicative of the third quality level when the RSRP-RSSI ratio is greater than the second threshold ratio (e.g. when the RSRP is approximately equal to the RSSI). As will be appreciated, reference signal received quality, RSRQ, is proportional to the ratio of RSRP to RSSI when measured over the same bandwidth. As such, RSRP values which are lower compared to the RSSI may correspond to lower RSRQ values (i.e. lower signal quality).

Whilst the above discussion refers to an RSRP-RSSI ratio, it will be appreciated that, in some examples, such thresholding may be based on a difference between the RSRP and RSSI measurements instead.

In some examples, the measurements may include power spectral density measurements. Other properties of the received signals (e.g. power measurements) may be obtained from such measurements (e.g. via frequency-integration).

Whilst in the example of Figure 2, the resource classification information is described as being generated at the terminal device 200 that performs the measurements of the localisation signals 220, it will be appreciated that, in some examples, this generation may take place at other terminal devices (e.g. UEs 201, 202), at a base station (e.g. a serving base station), or at a CN entity (e.g. the LMF). In such examples, terminal device 200 may instead transmit information indicative of the measurements for use in generating the resource classification information.

In some examples, terminal device 200 may receive (e.g. from another terminal device or a base station, such as the serving base station) additional resource classification information for use in determining which of the set of resources to use in performance of sidelink transmission. In this case, terminal device 200 may fulfil the role of a 'forwarding UE' as described above. For instance, the additional resource classification information may be received prior to the transmission of the resource classification information, and the transmitted resource classification information may be based on the received additional resource classification information. In such examples, terminal device 200 may forward the information without modification. That is to say, the transmitted resource classification information is the additional resource classification information. Alternatively, terminal device 200 may determine that the received additional resource classification information conflicts with the resource classification information. The received additional resource classification information may conflict with the resource classification information when the same resource or set of resources have been classified into different classes in the two sets of resource classification information. In this case, terminal device 200 may transmit correction information for use by the terminal device that generated the additional resource classification information in modifying a portion of the additional resource classification information that conflicts with a portion of the resource classification information. For instance, the transmitted correction information may include classifications of one or more resources from the conflicting portion of the resource classification information. This information may be used to replace the conflicting information in the additional resource classification information. In this way, terminal device 200 may make use of its probing capability to ensure that incorrect or outdated resource classification information is not propagated to further terminal devices.

As described above, terminal device 201 may receive resource classification information and make use of it to determine which of the set of resources to use in performance of sidelink transmission (e.g. communication with terminal device 202). In some examples, prior to determining which of the set of resources to use in performance of sidelink transmission, terminal device 201 may validate the received resource classification information. In some examples, terminal device 201 may also receive (e.g. from another terminal device or a base station, such as the serving base station) additional resource classification information for use in determining which of the set of resources to use in performance of sidelink transmission. In the event that the received additional resource classification information conflicts with the received resource classification information, terminal device 201 may transmit correction information for use by at least one of: (i) a terminal device that generated the resource classification information (e.g. terminal device 200) in modifying a portion of the resource classification information that conflicts with a portion of the additional resource classification information, and (ii) a terminal device that generated the additional resource classification information in modifying the portion of the additional resource classification information that conflicts with the portion of the resource classification information. In such examples, the correction information may include a list of conflicting resource classifications, which can be resolved by the other terminal devices using their probing capabilities.

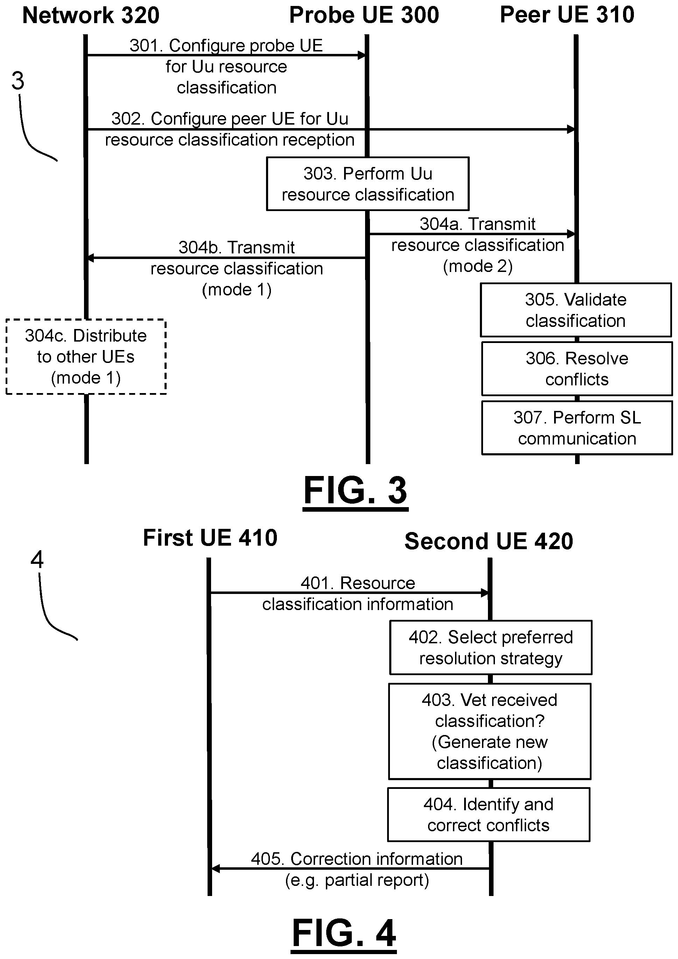

The conflict resolution procedure that may be performed when a terminal device receives conflicting resource classification information is described in further detail below with respect to Figures 3 and 4. Similarly, the validation procedure that may be performed when a terminal device receives resource classification information from another device is described below with reference to operation 302 of Figure 3.

Figure 3 is a message flow sequence, indicated generally by the reference numeral 3, in accordance with some aspects of the described technology. The message flow sequence 3 shows an example implementation within which aspects of a process, such as that described with reference to Figures 1 and 2, may be performed. In this example, a probe UE 300 is shown in communication with peer UE 310 and network 320.

In general terms, the process depicted in Figure 3 relates to the situation in which resources used for Uu traffic are classified by one or more probe UEs (e.g. UE 300 and terminal device 200) to enable a potential reuse of their spectrum for other purposes, such as SL communications or SL positioning by SL peer UEs (e.g. UE 310, terminal devices 201, 202). Resource classification information generated by the probe UE(s) may then be sent to the peer UE(s), which can assess whether and/or how to use these resources for SL activities based on: their own wireless channel conditions and the potential impact of their own transmissions on the Uu resources.

Similarly to as described with reference to Figures 1 and 2, the resource classification process may involve one or more probe UEs:
1. performing measurements (e.g. power spectral density, RSRP, RSSI, SINR, etc.) of localisation signals received over a set of resources that are targeted for Uu traffic;
2. classifying (i.e. ranking) the resources of the set of resources into one of several quality classes (e.g. high-quality, medium-quality and low-quality Uu signals) which may be associated with a particular peer UE behaviour; and
3. informing other UEs via SL about the above classification so that those UEs can determine whether one or more of the classified resources can be used locally to deploy a SL communications session.

It will be appreciated that various operations and entities described with reference to Figure 3 may correspond to operations and entities described with reference to the preceding Figures. For instance, probe UE 300 may correspond to terminal device 200 and peer UE 310 may correspond to terminal device 201.

It will be further appreciated that various operations described with reference to Figure 3 may be performed by entities other than those expressly depicted. For instance, some or all of the operations attributed to the network 320 may be performed by various network entities, such as the LMF, another core network entity or a base station (e.g. a base station in the serving cell of the probe UE). Similarly, various operations attributed to probe UE 300 and peer UE 310 may be performed by other UEs.

The message flow depicted in Figure 3 may occur responsive to the LMF (or another network entity) identifying a set of probe UEs to perform Uu resource ranking (i.e. classification) and/or a set of peer UEs to receive the Uu resource ranking. Whilst the following procedure is described with reference to a single probe UE 300, in some examples this process may occur in parallel across multiple probe UEs. Similarly, operations performed by and in respect of peer UE 310 may be performed in parallel across multiple peer UEs.

In operation 301, network 320 may configure probe UE 300 to perform Uu resource classification. For instance, a TRP (e.g. a base station) of network 320 may transmit a signal (e.g. an RF signal) with probe terminal configuration information for configuring a first terminal device (e.g. probe UE 300) to generate resource classification information for use by a second terminal device (e.g. peer UE 310) in determining which of a set of resources to use in performance of sidelink transmission. In some examples, probe terminal configuration information may include classification criteria. Such classification criteria may include key performance indicators (KPIs, such as RSRP, RSSI and/or SINR) and/or thresholds (e.g. quality, power, SINR thresholds) for use in generating the classification as described with reference to Figure 2.

In some examples, a network 320 element (e.g. an LMF) may instruct (e.g. via a signal transmitted from a base station or some other TRP) probe UE 300 on how to update existing resource classification information (e.g. received from another UE). For instance, network 320 may instruct probe UE 300 to refrain from generating resource classification information itself if the existing resource classification information is sufficiently recent (e.g. when the age of the existing resource classification information is less than a threshold elapsed time or number of subframes). In addition or alternatively, network 320 may instruct probe UE 300 to generate new resource classification information for some or all of the set of resources. For instance, probe UE 300 may 'refresh' (i.e. regenerate) the resource classification information in this way when the age of the existing resource classification information is greater than a threshold elapsed time or number of subframes. In some such examples, different thresholds for the elapsed time or number of subframes may correspond to different resources. Alternatively, a common threshold may be used for all resource. In addition or alternatively, network 320 may instruct probe UE 300 to transmit the existing resource classification information to one or more nearby peer UEs (e.g. peer UE 310) via SL. In such examples, probe UE 300 may indicate to the peer UEs that the transmitted information is a relayed report. For instance, this may be achieved by appending a relay or hop counter to the information, or by incrementing a counter that is already included in the information.

In operation 302, network 320 may configure peer UE 310 for reception of Uu resource classification information. For instance, a network element (e.g. a base station or another network element via a base station or some other TRP) may transmit peer terminal configuration information for configuring a terminal device (e.g. peer UE 310) to receive resource classification information for use by the terminal device in determining which of a set of resources to use in performance of sidelink transmission.

In some examples, network 320 may, via the peer terminal configuration information, configure a period over which peer UE 310 is to act in accordance with the received resource classification information. Put another way, network 320 may inform peer UE 320 that, for a particular period of time (e.g. given by an interval *[t1, t2*] included in the configuration signal), it is to implement the actions associated with the classification provided by the probe UE. Such actions may correspond to those described above with reference to Figure 2.

In addition or alternatively, network 320 may, via the peer terminal configuration information, instruct peer UE 310 to assess the validity of the received resource classification information. For instance, the resource classification information may be deemed valid in the neighbourhood of probe UE 300. In such examples, the location of probe UE 300 may be known by the network (e.g. via the LMF), and may be provided to peer UE 310 for use in such an assessment. For instance, peer UE 310 may be deemed to be in the neighbourhood of probe UE 310 (and hence can validly make use of the resource classification information) when located in the same or a neighbouring cell as probe UE 310, or when located within a threshold distance. Other means will be apparent to the skilled reader.

In some examples, the resource classification information may be deemed valid if the resource classification information is received within a threshold time interval from transmission of the resource classification information by probe UE 300. For instance, the threshold time interval may be included in the configuration signal provided to peer UE 310 by network 320.

Alternatively, the resource classification information may only be deemed valid both in a neighbourhood of probe UE 300 and if the resource classification information is received within a target latency relative to a timestamp of the transmission by probe UE 300. Such a neighbourhood may be defined as a sphere of radius R (provided that the received resource classification information is not indicated by probe UE 300 to be a relayed report). In such examples, R may be a maximum acceptable distance from probe UE 300. In this case, peer UE 310 may estimate the distance to probe UE 300 (e.g. using available ranging methods). If the estimated distance is smaller than R, then the resource classification information is deemed valid. Alternatively, R may correspond to a minimal acceptable power or quality level at which the signal carrying the resource classification information is received. For instance, peer UE 310 may compute quality metric (e.g. RSRP, RSRQ, RSSI, SINR etc.). If this metric is at least equal to R, then the resource classification information is validated.

It will be appreciated that, in some examples, the threshold R used in validating resource classification information may be configured by the LMF (e.g. using signalling via a base station, such as LPP signalling). In such examples, R may be transmitted and/or updated periodically for those peer UEs near to (or believed to be near to) probe UE 300 and/or those UEs in problematic (i.e. low-signal) geographical areas. In some examples, rather than explicitly transmitting values for R to the peer UEs, one or more values for R may be stored locally at the peer UEs, with the LMF instructing the peer UEs which values to use at a particular time (e.g. via LPP signalling).

In some examples, the validity determination may be further based on a mobility profile of peer UE 310.

In addition or alternatively, network 320 may, via the peer terminal configuration information, instruct peer UE 310 how to resolve conflicts between received resource classification information reports. For instance, network 320 may configure peer UE 310 to make use of a preferred resolution strategy from a pre-agreed strategy list. In some such examples, the strategy list may be stored at peer UE 310. It will be appreciated that multiple peer UEs may store the same strategy list, or may have different pre-agreed strategy lists according to their local conditions and service requirements. In some examples, peer UE 310 may receive (e.g. from the LMF via another network entity) peer terminal configuration information indicative of a selection of the preferred resolution strategy from the strategy list stored at the terminal device, the preferred resolution strategy being for use in resolving conflicts between the resource classification information from probe UE 300 and additional resource classification information received at peer UE 310.

In some examples, the strategy list may include a first strategy indicating that, in the event that conflicting resource classification reports are received, the peer UE should use the resource classification received over the strongest link. For instance, this may correspond to the nearest, and hence most relevant, probe UE. In addition or alternatively, the list of strategies may include a second strategy that indicates that the peer UE should use the resource classification received from the network, e.g. the serving base station. In addition or alternatively, the list of strategies may include a third strategy that indicates that the peer UE should use the resource classification received via the most static link. For instance, this may correspond to the link with the lowest associated Doppler shift. Other strategies may also be apparent to the skilled reader.

Further aspects of the conflict resolution process are described below with reference to Figure 4.

In operation 303, probe UE 300 performs the Uu resource classification, e.g. as instructed by network 320 in operation 301. Put another way, probe UE 300 generates resource classification information for use by another UE in determining which of a set of resources to use in performance of sidelink transmission. Such classification may be performed as described with reference to Figure 2. In some examples, probe UE 300 timestamps the resulting resource classification information. In some such examples, the resulting resource classification information generated by probe UE 300 may be represented by a list of tuples of the form (PRS ID, PRB, class, relay or hop-counter, timestamp). The time stamp may correspond to a time at which signals (e.g. localisation signals) used in generation of the resource classification were received at probe UE 300. In other examples, the timestamp may correspond to a time at which the resource classification was performed, a time at which the resource classification is to be transmitted by probe UE 300, or a current time.

In operation 304, probe UE transmits the generated resource classification information for use by another UE (e.g. peer UE 310) in determining which of the set of resources to use in performance of sidelink transmission.

However, sidelink transmission as specified during 3GPP release 16 specifies two different resource allocation modes in which a SL transmitter UE may be configured to perform its NR SL transmissions. These modes are denoted as NR SL mode 1 and NR SL mode 2. In mode 1, a sidelink transmission resource is assigned by the network to the SL transmitter UE, while a SL transmitter UE configured in mode 2 may autonomously select its SL transmission resources.

In operation 304a, corresponding to SL resource allocation mode 2, probe UE 300 transmits the resource classification information to one or more peer UEs (e.g. peer UE 310) via sidelink. The peer UEs may then make use of this information in determining which resources to use in performance of sidelink transmission.

In operation 304b, corresponding to SL resource allocation mode 1, probe UE 300 transmits the resource classification to network 320. For instance, such transmission may be performed via a serving base station. Based on this information, the network (e.g. at the LMF) may determine which resources should be used by peer UEs (such as peer UE 310) in performance of SL communications, and configure those UEs accordingly. In some examples, at operation 304c, the network may distribute the resource classification information for use by other UEs (such as peer UE 310).

In operations 305 to 307, peer UE 310 may perform any operations it was configured to perform by the network at operation 302. For instance, having received resource classification information (whether transmitted directly from probe UE 300 or relayed via another UE/ a base station) in operation 305, the peer UE 310 may assess the validity of the received report. As described above, such validity determination may be based on time- or range-based factors. In operation 306, and in cases in which peer UE 310 receives multiple conflicting resource classification information reports, peer UE 310 may perform conflict resolution as previously described. In some examples, at operation 307, peer UE 310 may then perform sidelink transmission in accordance with the resource classification information.

As will be appreciated by the skilled person, the process for mode 1 allocation, in which the network is responsible for the SL resource allocation may be as follows. Firstly, the terminal device may transmit a sidelink scheduling request (SL-SR) to the network, e.g. a base station. Responsive to receiving the SL-SR, the base station may transmit a resource allocation for use by the terminal device in performing sidelink transmission. For instance, such a resource allocation may be determined by the network based on a resource classification determined by a probe UE (e.g. as transmitted to the network at operation 304b in Figure 3). The terminal device may then deploy a sidelink communication session using the allocated resources (e.g. physical SL control channel, PSCCH, and/or physical SL shared channel, PSSCH) and transmit sidelink signals to another terminal device. As part of the sidelink communication session, the other terminal device may transmit responsive signals (e.g. using physical SL feedback channel, PSFCH) to terminal device. Medium access control (MAC) level details of aspects of this procedure are described in section 5.8.3 of TS 38.321.

Figure 4 is a message flow sequence, indicated generally by the reference numeral 4, in accordance with some aspects of the described technology. The message flow sequence 4 shows an example implementation within which aspects of a process, such as that described with reference to Figures 1 to 3, may be performed. In this example, a first probe UE 410 is shown in communication with a second probe UE 420.

As described above, both probe UEs and peer UEs may, at various points, receive conflicting resource classification information. Whilst the below procedure is primarily described with reference to the case in which the UE receiving conflicting information is a probe UE, it will be appreciated that a similar procedure may be performed in the case that this UE is a peer UE (i.e. a UE without the sensing capability to perform resource classification as described herein).

In general terms, the message flow depicted in Figure 4 relates to the situation in which a first UE 410 transmits resource classification information to a second UE 420 (in such cases, first UE 410 may be referred to as a 'first' or 'earlier' classification/ranking source). Whilst second UE 420 may elect to simply 'trust' this information (e.g. subject to a validation procedure as described herein), second UE 420 may instead vet this information by performing a sensing procedure to generate its own resource classification for comparison with that received from first UE 410.

In operation 401, second probe UE 420 receives resource classification information from first probe UE 410. In the event that this information conflicts with the resource classification information it generated itself (i.e. the same resource is assigned to two different classes by second probe UE 420 and first probe UE 410), it is necessary for second probe UE 420 to identify and resolve the conflict.

In general terms, operations 402 to 405 relate to second probe UE 420 determining whether to vet the received resource classification information and, if so, correct any conflicts and informing first probe UE 410 of any resultant changes to the classification information.

For instance, at operation 402, probe UE 420 may select a preferred resolution strategy from a list of conflict resolution strategies such as that discussed above with reference to Figure 3.

In operation 403, if the selected strategy indicates that conflicting information should be `vetted', second probe UE 420 may generate new resource classification information (e.g. bases on a further sensing procedure). Whilst this new classification may be generated in respect of all resources classified by the received resource classification information, in some examples, the conflict resolution strategy may indicate that the new resource classification information should be generated only in respect of certain resources (e.g. based on sensing capabilities of second probe UE 420).

In operation 404, second probe UE 420 may compare the classification information received from first probe UE 410 with the classification information generated at second probe UE 420. In this way, conflicts may be identified and corrected in accordance with the selected resolution strategy. Alternatively, conflicts may be identified by comparing the classification information received from first probe UE 410 with other classification information received and/or validated at second probe UE 420.

In operation 405, second probe UE 420 transmits correction information for use by first probe UE 410 in updating its resource classification information. For instance, this correction information may take the form of a 'partial report' of corrected resource classification information. In some examples, second probe UE 420 may transmit a SL control signal in which the updated Uu resource classification is unicasted or multicasted to first probe UE 410 and/or other UEs. In some examples, this updated resource classification may include an updated timestamp (e.g. corresponding to a time at which the correction information was generated/transmitted).

As described above, a similar procedure may be performed in the case that UE 420 does not have probe sensing capabilities (i.e. it is not able to generate its own resource classification information). In the event that such a UE receives multiple conflicting resource classification reports, the UE identifies each individual conflict as described with reference to operation 404 and informs the probe UEs which generated the conflicting reports. For instance, the peer UE may generate a list of conflicts and transmit it via multicast SL to the probe UEs involved in the conflict. Responsive to this, the probe UEs involved in the conflict may perform the conflict resolution procedure represented by the message flow 4. In some examples, the list of conflicts may be represented by the tuple (resource_id, conflicting_class_1, ..., conflicting class_n).

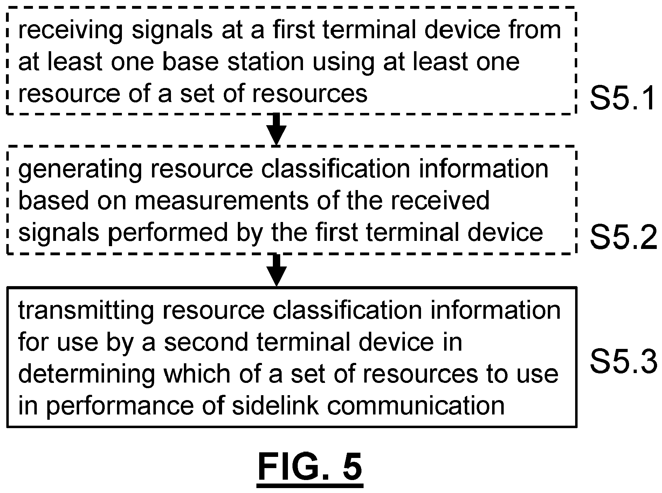

Figure 5 is a flowchart depicting various operations which may be performed in accordance with various examples. For instance, the operations depicted in Figure 5 may be executed by a terminal device or other suitable apparatus.

In operation S5.3, a first terminal device transmits resource classification information for use by a second terminal device in determining which of a set of resources to use in performance of sidelink transmission. In some examples, the resource classification information may indicate that a particular resource of the set of resources belongs to a particular resource class of a plurality of resource classes as described with reference to the previous Figures. The resource classification information may be transmitted to the network via a base station (e.g. in mode 1, as described above). Alternatively, (e.g. in mode 2 as described above), the resource classification information may be transmitted to another terminal device, for instance via SL communication. In some examples, the resource classification information may be transmitted to other terminal devices and may also be transmitted to the network. When sidelink communication is used for transmitting the resource classification information, the resources used for the sidelink communication may be selected based on the resource classification information.

In some examples, the transmitted resource classification information may not explicitly include information relating to all of classified resources. For instance, in some examples, omission of a resource from the resource classification information may indicate that the resource is a member of a particular class. Put another way, using received resource classification information, a receiving UE may be able to infer the classification of various resources not explicitly classified in the information report itself. For instance, the resource classification information may, in some examples, omit those resources that have been classified such that they are not permitted to be used (for instance, have been classified in the second class). The recipient terminal device may then utilise only those resources that are explicitly indicated in the resource classification information. Alternatively, in other examples, the resource classification information may omit to identify those resources on which there are no restrictions. Thus, the resource classification information may identify only those resources that are either not permitted for use or may be used but with certain restrictions, e.g. on transmission power (for instance, resources that have been classified in the first or third classes). The recipient terminal device may thus infer that it is permitted to use, with no restrictions, resources that are not identified in the resource classification information.

In some examples, such as when the first terminal device is operating as a probe, the method may, prior to operation S5.3, comprise operations S5.1 and S5.2. In operation S5.1, the first terminal device receives signals (e.g. PRS) from at least one base station using at least one resource of a set of resources. In operation S5.2, the first terminal device generates resource classification information based on measurements of the received signals performed by the first terminal device.

The resource classification information generated in S5.2 may then be transmitted in operation S5.3. In other examples, the generated resource classification information may be combined with additional resource classification information which was generated elsewhere and was received at the first terminal device (e.g. from another device). For instance, the two sets of resource classification information may be combined by choosing the most conservative resource classification from each set of resource classification information, and/or concatenating the sets of resource classification information (for instance, if one set of resource classification information identified resources not identified in the other). For instance, a logical OR or AND may be applied to the two sets of resource classification information. In such an example, if a first resource is marked as "do not use" = 0 in one set of resource classification information and as "use" = 1 in the other set of resource classification information, the terminal device may perform a logical AND, such that the first resource is classified as 0 = "do not use".

As described above, for instance, with reference to operation 301 of Figure 3, it will be appreciated that the first terminal device may receive, from the network (e.g. LMF via a base station), probe terminal configuration information for use in generating the resource classification information in operations S5.1 and S5.2.

In other examples, such as when the first terminal device is operating as a peer, prior to operation S5.3, the first terminal device may receive additional resource classification information, e.g. from another terminal device. The first terminal device may then transmit the additional resource classification information (as the resource classification information) in operation S5.3, for instance, after vetting the received additional resource classification information. In such examples, the first terminal device may increment a 'hop counter' prior to forwarding the additional resource classification information.

In some examples, the first terminal device may receive first and second additional resource classification information from respective terminal devices. The first terminal device may then identify conflicts before, proceeding to operation S5.3. In such examples, the resource classification information for transmission may be selected based on a resolution strategy, for instance as described with reference to operation 402 of Figure 4.

In examples in which a conflict is found, the first terminal device may generate and transmit correction information to the terminal device from which one or both the first and second additional resource classification information was received.

In examples, such as when the first terminal device is operating as a peer, and as described, for instance, with reference to operation 302 of Figure 3, it will be appreciated that the first terminal device may receive, from the network (e.g. LMF via a base station), peer terminal configuration information e.g. for use in vetting received resource classification information and/or resolving conflicts between received additional resource classification information.

As will of course be appreciated, various operations illustrated in Figure 5 may correspond to operations already described with reference to the preceding Figures. For instance, operation S5.3 may correspond to operations 304a, 304b or 304c in Figure 3.

Figure 6 is a flowchart depicting various operations which may be performed in accordance with various examples. For instance, the operations depicted in Figure 6 may be executed by a terminal device or other suitable apparatus.

In operation S6.1, a terminal device receives resource classification information for use by the terminal device in determining which of a set of resources to use in performance of sidelink transmission.

In some examples, the method may comprise operation S6.2. In operation S6.2, the terminal device determines, using the received resource classification information, which of the set of resources to use in performance of sidelink transmission.

As will be appreciated from the above discussion, the method of Figure 6 may additionally include one or more of:
- receiving peer terminal configuration information,
- vetting received resource classification information,
- identifying and correcting conflicts with other received resource classification information;
- sending correction information to a terminal device from which resource classification information is received, and
- forwarding received resource classification information, or modifying (e.g. as described above with reference to Figure 5) and then sending the modified resource classification information.

These operations are discussed in more detail elsewhere, and such discussion is not repeated here.

As will of course be appreciated, various operations illustrated in Figure 6 may correspond to operations already described with reference to the preceding Figures. For instance, operation S6.2 may correspond to operation 307 in Figure 3. Similarly, operation S6.1 may correspond to receipt of signal 401 in Figure 4.

In some examples of the technology described herein, the resource classification information may indicate that a particular resource belongs to more than one resource class of the plurality of resource classes with respective probabilities. In other words, rather than just providing a classification of the particular resource into a single corresponding resource class, in some examples the resource classification information may indicate a probability (or likelihood) that the particular resource belongs to each of two or more classes of the plurality of resource classes. For instance, this may occur when measurements of localisation signals used to generate the resource classification information are indicative of (or at least consistent with) different possible classifications of the particular resource.

In some such examples, values for these probabilities may be included in the resource classification information. For instance, the resource classification information may indicate respective probabilities for each of the plurality of resource classes. In other examples, only resource classes with a respective probability over a threshold may be indicated, along with their probabilities. In other examples, all classes with a non-zero probability may be indicated along with their probabilities. In other examples, the N most likely/probable classes may be indicated along with their probabilities, where N is pre-determined or configured.

As will be appreciated, values for these probabilities may be determined by the probe terminal device (e.g. terminal device 200, UE 300) when generating the resource classification information. For instance, performing measurements (e.g. power spectral density, RSRP, RSSI, SINR, etc.) of localisation signals received using the particular resource as described above may enable generation of a vector of probabilities that the particular resource belongs to each of multiple classes of the plurality of classes. Put another way, signal samples collected by the probe terminal device using a resource may enable generation of a probability vector for that resource, the *k^{th}* entry in the probability vector corresponding to a probability that the resource belongs to class *k.* It will be appreciated that generation of such a vector may be achieved in various ways. For instance, the entries of the vector may be computed using hypothesis testing methods. Alternatively, the entries may be computed using a trained multi-label multi-class classifier (e.g. using an artificial neural network). In some examples, the entries of the vector for a given resource may take the form (p₁, p₂, ..., pₙ), where pᵢ corresponds to the probability that the given resource belongs to class *i*, and p₁+p₂+...+pₙ=1.

As described above, these probabilities may be considered by terminal devices when determining which resource(s) of a set of resources to use for sidelink transmission. For instance, a peer terminal device (e.g. terminal devices 201, 202, UE 310) which receives the resource classification information may determine, based on the probabilities that a given resource belongs or is likely to belong to a given resource class. For example, the highest probability for a resource may indicate that the resource belongs or is likely to belong to the respective class corresponding to the highest probability for that resource.

Sidelink transmission may then be performed in accordance with this classification as described above. For instance, the resource class to which the resource is determined to belong (or likely to belong) may indicate whether and/or how the second terminal devices can use the particular resource in performance of sidelink transmission

Put another way, a peer terminal device may receive a class probability vector for a given resource as part of the resource classification information as described above. Based on this vector, the peer terminal device may identify the given resource as belonging to the class with the highest probability in the vector. The peer terminal device may then determine, based on the class to which the given resource is identified to belong, whether and/or how to use the given resource in performance of sidelink transmission.

In some examples, the second terminal device may determine not to use (i.e. discard) the resource classification information provided by the first terminal device and/or another network node. For instance, this may occur when the resource classification information does not indicate that a given resource is significantly more likely to belong to one resource class than another. Put another way, this may occur when the resource classification information indicates that all classes are equiprobable (i.e. the probabilities included in the resource classification information are all of the same or nearby values). In addition or alternatively, the resource classification information may also be discarded by the second terminal device when the highest probability indicated by the resource classification information is below a threshold (i.e. no class is indicated with sufficient confidence). In other examples, the resource classification information may be discarded by the second terminal device when a difference between the highest probability and another probability indicated by the resource classification information (e.g. the second-highest probability, or the lowest non-zero probability) is below a threshold. Other reasons for discarding the resource classification information based on the indicated probabilities will be apparent to the skilled person.

In some examples, the second terminal device may determine to discard the resource classification information provided by the first terminal device and/or another network node responsive to assessing that performance of sidelink transmission based on the received resource classification information is unsatisfactory. For instance, the second terminal device may use the resource classification information for performance as described above (e.g. by determining whether and/or how to use a given resource according to the resource class associated with the highest probability for that resource). In some such examples, one or more KPIs (e.g. RSSI, RSRP, SINR) may be used to evaluate performance of the sidelink transmission. If the KPIs indicate that performance is not satisfactory (e.g. based on predetermined performance criteria, which may be stored at the second terminal device or received from the network), then the resource classification information may be discarded. In some such examples, performance evaluation may take place at regular time intervals (e.g. every second), and/or after a predetermined number of sidelink packet transmissions.

In some examples, rather than discarding the resource classification information entirely due to poor performance, sidelink transmission may instead proceed according to a classification indicated to be less probable by the resource classification information. For instance, if the resource classification indicates that a given resource is most likely to belong to a first resource class, but may also belong to a second resource class with a lower probability, and performance of sidelink transmissions using the given resource in accordance with the first resource class is assessed to be unsatisfactory, then sidelink transmission may instead proceed using the given resource in accordance with the second resource class. It will be appreciated that this procedure may be repeated in turn for lower-probability classes if the performance is found to be inadequate, or the resource classification information may be discarded in its entirety if performance continues to be unsatisfactory.

Figure 7 is a schematic illustration of an example configuration of a computing apparatus 7 which may be configured to perform various operations described with reference to Figures 1 to 6.

Computing apparatus may comprise control apparatus 700 which is configured to control operation of other components which form part of the computing apparatus 7 thereby to enable performance of various operations described with reference to Figures 1 to 6. The computing apparatus 700 may comprise processing apparatus 701 and memory 702. Computer-readable code 702-2A may be stored on the memory 702, which when executed by the processing apparatus 701, causes the control apparatus 700 to perform any of the operations described herein.

In addition, computing apparatus may further include a display 703, user interactive interface (UII) 704, radio frequency interface 705 configured to interface radio frequency signals transmitted and received via a radio frequency antenna array 705A, and global navigation satellite system (GNSS) 706. In some examples, other satellite communications systems may be used instead of or in addition to GNSS 706.

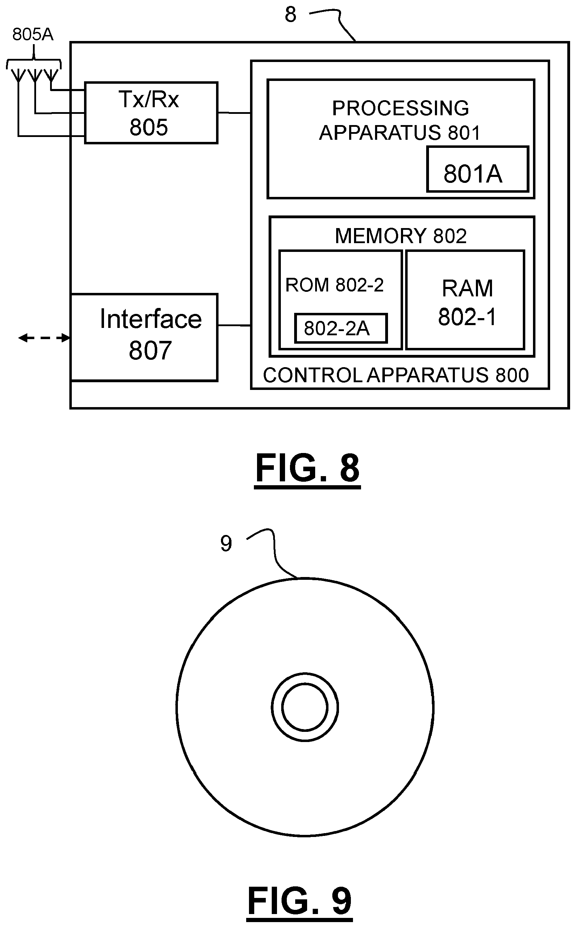

Figure 8 is a schematic illustration of an example configuration of a base station 8 which may be configured to perform various operations described with reference to Figures 1 to 6.

The base station 8, which may be referred to an eNB or access point (AP), comprises control apparatus 800 which is configured to control operation of other components which form part of the base station 7 thereby to enable transmission of signals to and receipt of signals from UEs in its coverage area vicinity. For example, the base station control apparatus 800 is configured to cause transmission of reference signals to UEs within its coverage area. Furthermore, in some examples, the control apparatus 800 may be configured to enable receipt of reference signal measurement data and/or location data from the UEs in its coverage area. The control apparatus 800 may also enable communication with other base stations and/or other network nodes. The control apparatus 800 may additionally be configured to cause performance of any other operations described herein with reference to the base station 8.

The base station 8 comprises a radio frequency antenna array 805 configured to receive and transmit radio frequency signals. Although the base station 8 in Figure 8 is shown as having an array 805A of three antennas, this is illustrative only. The number of antennas may vary, for instance, from one to many hundreds.

The base station 8 further comprises a radio frequency interface 805 configured to interface the radio frequency signals received and transmitted by the antenna 805A and a control apparatus 80. The radio frequency interface 805 may also be known as a transmitter, receiver and/or transceiver. The base station 8 may also comprise an interface 807 via which, for example, it can communicate with other network elements such as other radio access network entities (such as the other base stations) and/or core network entities.

The base station control apparatus 800 may be configured to process signals from the radio frequency interface 805, to control the radio frequency interface 805 to generate suitable RF signals to communicate information to UEs via the wireless communications link, and also to exchange information with other base stations 7 and core network entities via the interface 807.

The control apparatus 800 may comprise processing apparatus 801 and memory 802. Computer-readable code 802-2A may be stored on the memory 802, which when executed by the processing apparatus 801, causes the control apparatus 800 to perform any of the operations described herein and attributed to the base station 8.

Some further details of components and features of the above-described devices/entities/apparatuses 7, 8 and alternatives for them will now be described.

The control apparatuses described above 700, 800 may comprise processing apparatus 701, 801 communicatively coupled with memory 702, 802. The memory 702, 802 has computer readable instructions 702-2A, 802-2A stored thereon, which when executed by the processing apparatus 701, 801 causes the control apparatus 700, 800 to cause performance of various ones of the operations described with reference to Figures 1 to 6. The control apparatus 700, 800 may in some instance be referred to, in general terms, as "apparatus".

The processing apparatus 701, 801 may be of any suitable composition and may include one or more processors 701A, 801A of any suitable type or suitable combination of types. Indeed, the term "processing apparatus" should be understood to encompass computers having differing architectures such as single/multi-processor architectures and sequencers/parallel architectures. For example, the processing apparatus 701, 801 may be a programmable processor that interprets computer program instructions 702-2A, 802-2A and processes data. The processing apparatus 701, 801 may include plural programmable processors. Alternatively, the processing apparatus 701, 801 may be, for example, programmable hardware with embedded firmware. The processing apparatus 701, 801 may alternatively or additionally include one or more specialised circuit such as field programmable gate arrays FPGA, Application Specific Integrated Circuits (ASICs), signal processing devices etc. In some instances, processing apparatus 701, 801 may be referred to as computing apparatus or processing means.

The processing apparatus 701, 801 is coupled to the memory 702, 802 and is operable to read/write data to/from the memory 702, 802. The memory 702, 802 may comprise a single memory unit or a plurality of memory units, upon which the computer readable instructions (or code) 702-2A, 802-2A is stored. For example, the memory 702, 802 may comprise both volatile memory 702-1, 802-1 and non-volatile memory 702-2, 802-2. In such examples, the computer readable instructions/program code 702-2A, 802-2A may be stored in the non-volatile memory 702-2, 802-2 and may be executed by the processing apparatus 701, 801 using the volatile memory 702-1, 802-1 for temporary storage of data or data and instructions. Examples of volatile memory include random-access memory (RAM), dynamic random-access memory (DRAM), and synchronous dynamic random-access memory (SDRAM) etc. Examples of non-volatile memory include read-only memory (ROM), programmable read-only memory (PROM), electronically erasable programmable read-only memory (EEPROM), flash memory, optical storage, magnetic storage, etc.

The memory 702, 802 may be referred to as one or more non-transitory computer readable memory medium or one or more storage devices. Further, the term 'memory', in addition to covering memory comprising both one or more non-volatile memory and one or more volatile memory, may also cover one or more volatile memories only, one or more non-volatile memories only. In the context of this document, a "memory" or "computer-readable medium" may be any media or means that can contain, store, communicate, propagate or transport the instructions for use by or in connection with an instruction execution system, apparatus, or device, such as a computer.

The computer readable instructions/program code 702-2A, 802-2A may be preprogrammed into the control apparatus 700, 800. Alternatively, the computer readable instructions 702-2A, 802-2A may arrive at the control apparatus via an electromagnetic carrier signal or may be copied from a physical entity 9 such as a computer program product, a memory device or a record medium such as a compact disc read-only memory (CD-ROM) or digital versatile disc (DVD) an example of which is illustrated in Figure 7. The computer readable instructions 702-2A, 802-2A may provide the logic and routines that enables the entities devices/apparatuses 7, 8 to perform the functionality described above. The combination of computer-readable instructions stored on memory (of any of the types described above) may be referred to as a computer program product. In general, references to computer program, instructions, code etc. should be understood to express software for a programmable processor firmware such as the programmable content of a hardware device as instructions for a processor or configured or configuration settings for a fixed function device, gate array, programmable logic device, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 7 and 8 are examples only and that various operations depicted therein may be omitted, reordered and/or combined.

Although the methods and apparatuses have been described in connection with an E-UTRA network, it will be appreciated that they are not limited to such networks and are applicable to radio networks of various different types.

Although various aspects of the methods and apparatuses described herein are set out in the independent claims, other aspects may comprise other combinations of features from the described embodiments and/or the dependent claims with the features of the independent claims, and not solely the combinations explicitly set out in the claims.

It is also noted herein that while various examples are described above, these descriptions should not be viewed in a limiting sense. Rather, there are several variations and modifications which may be made without departing from the scope of the present invention as defined in the appended claims.

## Claims

1. A first terminal device comprising:
means for transmitting resource classification information for use by a second terminal device in determining which of a set of resources to use in performance of sidelink transmission,
wherein the resource classification information indicates that a particular resource of the set of resources belongs to a particular resource class of a plurality of resource classes.

2. The first terminal device of claim 1,
wherein the particular resource class of the plurality of resource classes to which the particular resource belongs indicates whether and/or how the second terminal device can use the particular resource in performance of sidelink transmission.

3. The first terminal device of claims 1 or 2, further comprising:
means for receiving, from a network node, configuration information for use in configuring the first terminal to generate the resource classification information based on measurements of signals received from at least one transmit-receive point using at least one resource of the set of resources.

4. The first terminal device of claim 3, wherein the configuration information includes resource classification criteria for use in classifying resources via which the signals are received from the at least one transmit-receive point.

5. The first terminal device of any preceding claim, wherein the plurality of resource classes includes:
a first resource class which indicates that resources classified as such are permitted for use in performance of sidelink transmission, and
a second resource class which indicates that resources classified as such are not permitted for use in performance of sidelink transmission.

6. The first terminal device of claim 5,
wherein the plurality of resource classes further includes a third resource class which indicates that resources classified as such are permitted for use in performance of sidelink transmission with a sidelink transmission power below a sidelink transmission power threshold, and
wherein the first resource class indicates that resources classified as such are permitted for use in performance of sidelink transmission with a sidelink transmission power above or below the sidelink transmission power threshold.

7. The first terminal device of claim 5,
wherein at least one resource of the set of resources is classified as belonging to the first class when measurements of first signals received at the first terminal device from at least one network node using the at least one resource are indicative of the first signals being of a first signal quality,
wherein the at least one resource of the set of resources is classified as belonging to the second class when measurements of second signals received at the first terminal device from at least one network node using the at least one resource are indicative of the second signals being of a second signal quality that is higher than the first signal quality.

8. The first terminal device of claims 5, 6 and 7,
wherein the at least one resource of the set of resources is classified as belonging to the third class when measurements of third signals received at the first terminal device from at least one network node using the at least one resource are indicative of the third signals being of a third signal quality that is higher than the second signal quality.

9. The first terminal device of any preceding claim, further comprising:
means for receiving, from another terminal device or a network node, additional resource classification information for use in determining which of the set of resources to use in performance of sidelink transmission.

10. The first terminal device of claim 9,
wherein the additional resource classification information is received prior to the transmission of the resource classification information, and
wherein the transmitted resource classification information is based on the additional resource classification information.

11. The first terminal device of claim 9:
wherein the additional resource classification information conflicts with the resource classification information, and wherein the first terminal device further comprises:
means for transmitting correction information for use by a terminal device that generated the additional resource classification information in modifying a portion of the additional resource classification information that conflicts with a portion of the resource classification information.

12. The first terminal device of any preceding claim,
wherein the resource classification information indicates that the particular resource of the set of resources belongs to more than one resource class of the plurality of resource classes with respective probabilities, and
wherein the respective probabilities are for use by the second terminal device in determining that the particular resource belongs or is likely to belong to the particular resource class.

13. A second terminal device comprising:
means for receiving, from a first terminal device or a network node, resource classification information for use by the second terminal device in determining which of a set of resources to use in performance of sidelink transmission,
wherein the resource classification information indicates that a particular resource of the set of resources belongs to a particular resource class of a plurality of resource classes.

14. The second terminal device of claim 13, wherein the plurality of resource classes includes:
a first resource class which indicates that resources classified as such are permitted for use in performance of sidelink transmission, and
a second resource class which indicates that resources classified as such are not permitted for use in performance of sidelink transmission.

15. The second terminal device of claim 14,
wherein the plurality of resource classes further includes a third resource class which indicates that resources classified as such are permitted for use in performance of sidelink transmission with a sidelink transmission power below a sidelink transmission power threshold, and
wherein the first resource class indicates that resources classified as such are permitted for use in performance of sidelink transmission with a sidelink transmission power above or below the sidelink transmission power threshold.

16. The second terminal device of any one of claims 13 to 15,
wherein the resource classification information indicates that the particular resource of the set of resources belongs to more than one resource class of the plurality of resource classes with respective probabilities, and
wherein the second terminal device further comprises means for determining, based on the respective probabilities, that the particular resource belongs or is likely to belong to the particular resource class.

17. The second terminal device of any one of claims 13 to 16, further comprising:
means for receiving, from another terminal device or the network node, additional resource classification information for use in determining which of the set of resources to use in performance of sidelink transmission.

18. The second terminal device of claim 17,
wherein the additional resource classification information differs with the resource classification information,
and wherein the terminal device further comprises:
means for transmitting correction information for use by at least one of: (i) a terminal device that generated the resource classification information in modifying a portion of the resource classification information that conflicts with a portion of the additional resource classification information, and (ii) a terminal device that generated the additional resource classification information in modifying the portion of the additional resource classification information that conflicts with the portion of the resource classification information.

19. The second terminal device of claim 17 or 18, further comprising:
means for receiving, from the network node, a signal indicative of a selection of a preferred resolution strategy from a strategy list stored at the terminal device, the preferred resolution strategy being for use in resolving conflicts between the resource classification information and the additional resource classification information.
